# EUROPÄISCHE PATENTSCHRIFT

(11) **EP 2 644 152 B1**
(45) Veröffentlichungstag und Bekanntmachung des Hinweises auf die Patenterteilung: **10.05.2017**
(21) Anmeldenummer: 12193164.6
(22) Anmeldetag: 19.11.2012
(51) Int. Cl.: A61C 8/00

(54) **Abutment und Klebebasis zum Aufsetzen auf Implantate im Kiefer eines Patienten**
Abutment and adhesive base for mounting on implants in the jaw of a patient
Butée et base de collage pour mise en place sur des implants dans la mâchoire du patient

(30) Priorität: 26.03.2012 DE 202012003003 U
(43) Veröffentlichungstag der Anmeldung: 02.10.2013
(73) Patentinhaber: Nedjat, Armin, 55237 Flonheim (DE); Bomba, Norbert, 65197 Wiesbaden (DE)
(72) Erfinder: Nedjat, Armin, 55237 Flonheim (DE); Bomba, Norbert, 65197 Wiesbaden (DE)
(74) Vertreter: Eickmeyer, Dietmar

(56) Entgegenhaltungen:
- WO-A1-00/24335
- DE-U1-202011 052 393
- KR-A- 20100 121 406
- US-A- 6 068 479

## Beschreibung

Die Erfindung betrifft ein Abutment und eine Klebebasis zum Aufsetzen auf einen Implarrtatkopf im Kiefer eines Patienten gemäß dem Oberbegriff des Patentanspruchs 1.

Ein Abutment und eine Klebebasis dieser Art sind aus der Kr - A - 2010 0121 406 bereits bekannt. Aus der KR - A - 2010 0121 406 ist bekannt, dass in Nuten eines Abutments Rippen einer Klebebasis formschlüssig eingreifen, wenn das Abutment auf die Klebebasis aufgesetzt wird.

Es ist in der Regel unumgänglich, die Schraubenimplantate leicht divergierend in den Kieferknochen eines Patienten einzudringen, um eine ausreichende Primärstabilität je nach individueller Gegebenheit zu erreichen. Um diese Divergenzen auszugleichen, werden im Stand der Technik Keramik-Abutments aus konischen Zirkoniumoxidhülsen auf dem oberen, aus der Gingiva ragenden Implantatabschnitt befestigt, z.B. geklebt, und anschließend individuell beschliffen.

Es ist hierbei im Stand der Technik ebenfalls bekannt, diese Abutments zweiteilig auszuführen, wobei eine erste Abutmenthülse als Klebebasis auf dem implantatkopf aufgesetzt wird und als Basis zum Aufsetzen eines speziell den Bedürfnissen des Kiefers des Patienten angepassten Zirkonabutments dient. Nach Aufsetzen der Klebebasis wird hierbei im Stand der Technik eine Einscannung der gesamten Kiefersituation vorgenommen, sodass die auf die Klebebasis aufzusetzenden Zirkonabutments speziell passend für diese Situation angefertigt werden. Insbesondere die Entwicklungen im Einsatz von CAD/CAM-Technologien in der Zahnmedizin- und Technik werden dazu genutzt, die Herstellung und Anpassung dieser Implantatabutments sehr individuell zu gestalten.

Die Implantatabutments bilden hierbei die Verbindung zwischen den im Kiefer eingebetteten Implantaten und der abschließenden Zahnersatzversorgung. Sie sind insbesondere wichtig, da Sie den Übergang aus der im Kiefer eingebetteten implantatanordnung hin zur Suprakonstruktion des Zahnersatzes durch das empfindliche Zahnfleisch herstellen.

Grundsätzlich ist bei den Abutments zwischen solchen zu unterscheiden, die als konfektionierte Abutments hergestellt werden und solchen Abutments, die im CAD/CAM-Verfahren individuell hergestellt werden. Bei vorkonfektionierten Abutments können diese in verschiedenen Größen, Formen und Angulierungen hergestellt und in der Regel als beschleifbare Abutments angeboten werden, wodurch diese zwar vorkonfektioniert sind, aber auch noch individuell zugeschliffen werden können. Es lässt sich allerdings auch feststellen, dass momenten die individuellen Anpassungen bei diesen Formen von Abutments begrenzt sind, weshalb vermehrt die im CAD/CAM-Verfahren individuell hergestellten Abutments Anwendung finden.

CAD/CAM-Abutments sind aus Titan oder Zirkoniumdioxid hergestellt, wobei diese keramischen Zirkoniumdioxidabutments auf einer Klebebasis aufgebracht werden, die in der Regel aus Titan gefertigt ist.

Bei Keramikabutments mit Klebebasis werden in der Regel diese Klebebasen industriell vorgefertigt, beispielsweise aus Titan. Auf diese Klebebasen wird nun das Keramikabutment aufgeklebt, wofür dieses in der Regel aus Zirkoniumdioxidblöcken durch ein Schleifen einer passenden Außengeometrie hergestellt wird. Häufig liegen diese als Halbzeug vor, bei denen die Verbindung zur Klebebasis bereits in den Materialblock eingearbeitet ist.

Grundsätzlich weist diese Vorgehensweise den Vorteil auf, dass das Abutment hier passgenau ausgerührt ist. Allerdings bedingt dies auch einen größeren Aufwand beim Herstellungsprozess, der in diesem Fall nicht vorkonfektioniert industriell erfolgen kann.

Ein weiteres Problem kann die Verklebung darstellen, da diese sich bei unsachgemäßer Handhabung lösen kahn. Um eine grundsätzliche Stabilität in der Ausrichtung des aufgeklebten Abutments auf der Klebebasis sicherzustellen, ist eine formschlüssige Verbindung vorgesehen, beispielsweise eine Nut- und Federverbindung oder auch eine einseitige Abflachung der Klebebasis, die mit einer entsprechenden Formgebung an der Verbindung im Abutment korrespondieren und so eine Rotation des Abutments auf der Klebebasis sicher aufschließen. Es lässt sich demnach grundsätzlich als nachteilig festhalter, dass der Aufwand des individuellen Herstellens des Abutments zum Aufsetzen auf die Klebebasis einen Einsatz von vorkonfektionierten industriell gefertigten Abutments nicht ermöglicht

Grundsätzlich ist eine Tendenz zur Verwendung der individuell gefertigten CAD/CAM-Abulments feststellbar, da nach dem Stand der Technik die Flexibilität bei der Verwendung von konfektionierten Abutments deutlich zu wünschen übrig lässt Allerdings wäre eine Verwendung von industriell hergestellten konfektionierten Abutments aus Kostengründen sowie zur Verbesserung der Arbeitseffizienz wünschenswert.

Es ist daher die Aufgabe der vorliegenden Erfindung, ein Abutment mit Klebebasis zum Aufsetzen auf einen Implantatkopf im Kiefer eines Patienten zu schaffen, das die zuvor genannten Nachteil vermeidet und eine Verwendung industriell vorgefertigter Abutments unterschiedlicher Größen, Formen und Angulierungen durch eine flexiblere Verbindung mit der Klebebasis ermöglicht.

Erreicht wird dies durch einen Gegenstand mit den Merkmalen des Anspruchs 1.

Kerngedanke der Erfindung ist es nun, die Verbindung zwischen Klebebasis und Abutment dergestalt zu verändern, dass ein variables Aufsetzen des Abutments auf diese Klebebasis möglich ist und gleichzeitig die Rotationssicherheit in gewohnter Weise erhalten bleibt, was im Stand der Technik nur durch eine Positionierung des Abutments auf der Klebebasis gegeben ist. Hierfür ist vorgesehen, die Verbindung zwischen Abutment und Klebebasis neu zu gestalten und hierbei durch eine Vielzahl von rotationssicheren Positionen des Abutments auf der Klebebasis eine Vielzahl von unterschiedlichen Positionen des Abutments auf der Klebebasis bewirken zu können.

Eine mögliche Bauform sieht hierbei eine Klebebasis vor, die außenseitig eine vertikal strukturierte Oberfläche aufweist Es können dies beispielsweise eine Vielzahl von vertikal verlaufenden Vertiefungen in der Außenfläche der Klebebasis sein, die mit entsprechenden vertikal verlaufenden Vorsprüngen auf der innenseitigen Verbindungsfläche des Abutments korrespondieren, Hierbei sind grundsätzlich verschiedene Kombinationen von Vertiefungen und Vorsprüngen mit vertikaler Ausrichtung im Verbindungsbereich zwischen Abutment und Klebebasis zur Verwirklichung der Erfindung sinnvoll.

Entscheidend hierbei ist, dass es aufgrund dieser Anordnung möglich ist, das Abutment auf die Klebebasis aufzusetzen, wobei das Abutment bis zum vollständigen Aufschieben auf die Klebebasis noch rotatorisch beweglich ist, in der endgültig gewählten Position allerdings durch ein Eingreifen der Vorsprünge in Aufnahmen im Verbindungsbereich zwischen Klebebasis und Abutment allerdings diese Rotation unterbunden wird. Es ist allerdings zu Korrekturzwecken möglich, diese Verbindung durch Anheben nochmals zu lösen und das Abutment korrekt auf der Klebebasis auszurichten und schließlich durch ein Aufdrücken auf die Klebebasis wieder die formschlüssige Verbindung zwischen Klebebasis und Abutment herzustellen. Auf diese Weise wird erreicht, dass die sichere Verklebung durch die formschlüssige Verbindung zwischen Abutment und Klebebasis zwar erreicht wird, es hierfür aber eine Vielzahl von möglichen Positionen gibt, die das Abutment auf der Klebebasis einnehmen kann.

Alternativ hierzu ist es in einer anderen Bauform möglich, durch eine spezielle vielflächige Ausbildung der Klebebasis einen Formschluss zu erreichen, die mit einem korrespondierenden Verbindungsbereich in einem Abutment korrespondiert. Das heißt, hier wäre die Rotationseicherheit in der Endposition nicht durch ineinandergreifende Vorsprünge und Vertiefungen im Verbindungsbereich bewirkt, sondern durch eine Vielzahl von Verbindungsflächen, die beim abschließend aufgesetzten Abutment auf der Klebebasis parallel aneinander anliegen.

Es kann sich hierbei um Kontaktfläche handeln, die sich über die gesamte Höhe der Klebebasis erstrecken und entsprechend in der Verbindung zum Abutment eingearbeitet sind, oder es kann sich um einen lediglich abschnittsweise an der Klebebasis und im Abutment angeordneten Verbindungsbereich handeln. Eine zweckmäßige Bauform weist einen vielkantigen Ring im unteren Bereich der Klebebasis auf, der mit einer entsprechenden Negativabformung im unteren Bereich der Aufnahme des Abutments korrespondiert. Somit ist der verdrehsichere Sitz des Abutments erst dann eingetreten, wenn das Abutment nach dessen Ausrichtung auf der Klebebasis auf diesen Ring aufgedrückt wird und formschlüssig aufsitzt. Dies hat somit sowohl fertigungstechnische Vorteile als auch Vorteile in der Anwendung, da eine freie Verdrehbarkeit zur Ausrichtung gewährleistet bleibt, bis das Abutment fest auf die Klebebasis aufgedrückt wird.

In beiden Fällen ist maßgeblich, dass nach endgültigen Aufsetzen des Abutments auf die Klebebasis eine Rotationssicherheit gegeben ist, diese Rotationssicherheit aber in einer Vielzahl von Positionen des Abutments auf der Klebebasis bewirkt werden kann.

Durch diese neue Gestaltung des Verbindungsbereichs zwischen Klebebasis und Abutment ist es nun möglich, doch auf vorkonfektionierte Abutments zuzugreifen und somit den CAD/CAM-Herstellungsprozess zu umgehen. Durch die Vielzahl von möglichen Positionen, die ein vorgefertigtes Abutment auf der Klebebasis einnehmen kann, ist es möglich, mit einer beschränkten Zahl von Mustern an Abutments eine Vielzahl von Positionen auf der Klebebasis einnehmen zu könnten. Somit ist eine deutlich höhere individuelle Anpassung trotz der vorgefertigten industriellen Abutments realisierbar. Es handelt sich somit um eine Zwischenlösung die eine wirtschaftliche und arbeitsökonomische Alternative zum vorherrschenden CAD/CAM-Herstellungsverfahren darstellte

Im Folgenden soll eine Bauform der Erfindung anhand einer Zeichnung näher beschrieben werden.

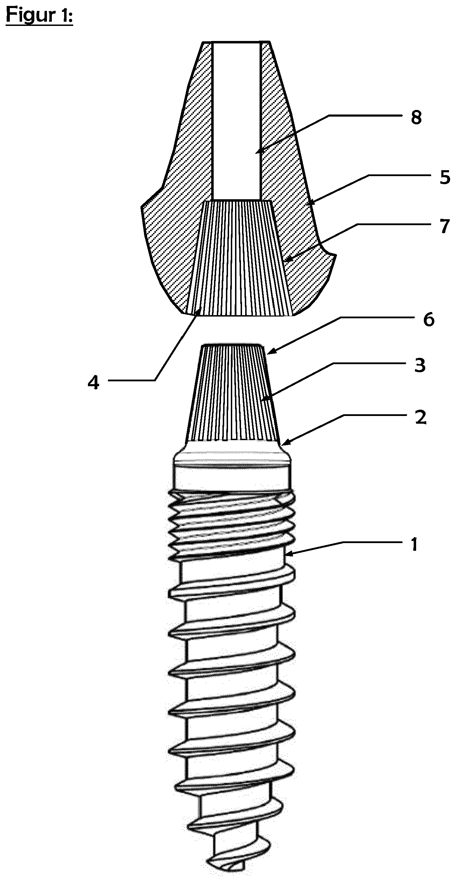

Figur 1 zeigt hierbei das Implantat 1 im freien nicht im Kiefer eingesetzten Zustand. Auf den implantatkopf bereits aufgesetzt ist eine Klebebasis 2, die eine konische Grundform aufweist und als symmetrischer Körper die Verbindung zum aufzusetzenden hier im Schnitt dargestellten Abutment 5 herstellt.

Die nach außen weisende Kontaktflächen 6 dieser Klebebasis 2 weist in dieser Bauform ein Profil aus einer Vielzahl vertikal verlaufender nutenartiger Vertiefungen 3 auf, die votlumfängiich auf der Kontaktfläche 6 dieser Klebebasis 2 angeordnet sind.

Hierzu korrespondierend sind federartig vertikal angeordnete längliche Erhebungen 4 auf der innenliegende Kontaktfläche 7 des Abutments 5 zur Klebebasis 2 angeordnet, die formschlüssig in die Vertiefungen 3 auf der Kontaktflächen 6 dieser Klebebasis 2 eingreifen. Hierbei sind diese Verbindungselemente 3 und 4 derart gleichmaßig über die Kontaktflächen 6 und 7 verteilt angeordnet, dass das Abutment 5 auf der Klebebasis 2 in einer Vielzahl von Positionen verdrehsicher, da formschlüssig aufgesetzt werden kann,

Durch leichtes Anheben des Abutments 5 von der Klebebasis 2 gleiten hierbei die Erhebungen 4 aus den Vertiefungen 3 und ermöglichen ein Drehen des Abutments 5 auf der Klebebasis 2 in eine andere Position, bevor durch einen Andruck des Abutment 5 auf die Klebebasis 2 die Verbindungselemente 3 und 4 wieder ineinander eingreifen und die Verbindung herstellen, wobei weiterhin auch eine Verklebung stattfindet.

Im Zeitraum vor der Bindung dieser Verklebung ist aber das genaue Justieren des Abutments 5 auf der Klebebasis 2 wie beschrieben möglich. Während der Aushärtung der Verklebung bewirkt diese Verbindung, dass die gewünschte Position nicht durch eine unbeabsichtigte Positionsveränderung wieder verändert wird. Schließlich bewirkt die Verbindung nach der Aushärtung der Verklebung, dass die gewünschte Position auch sicher gehalten wird, das heißt sie unterstützt die Klebeverbindung.

Die Durchbrechung 8 stellt den Schaft für eine Befestigungsschraube dar, Das Zirkon oder Kunststoff-Abutment 5 wird mit der Klebebasis 2 verklebt und die beiden Teile mit dem Implantat 1 verschraubt Auf die Konstruktion kommt dann beispielsweise die Krone.

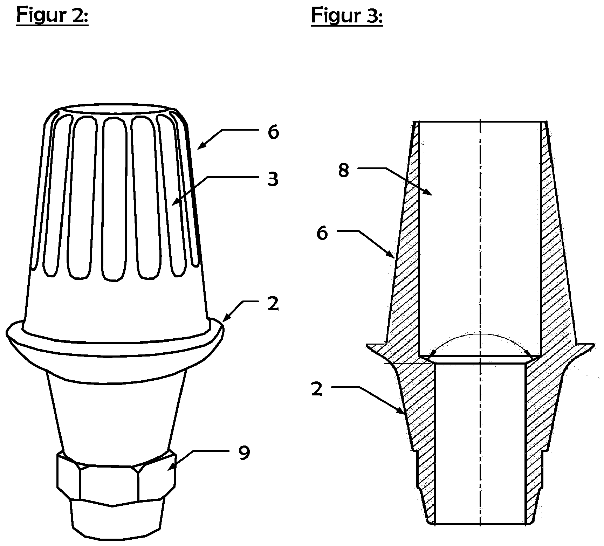

Die Figuren 2 und 3 zeigen nochmals eine Bauform der Klebebasis 2, in Figur 2 perspektivisch und in Figur 3 in geschnittener Garstellung, In Abweichung von Figur 1 ist in Figur 2 eine Bauform mit stärker ausgebildeten und dafür in ihrer Anzahl geringeren Vertiefungen 3 dargestellt, wodurch sich die Zahl möglicher Positionen des Abutments 5 auf der Kiebebasis 2 zwar verringert, dafür aber ein starker Formschluss über die Kontaktfläche 6 erreicht wird.

Figur 2 zeigt hier ebenfalls den Verbindungsbereich 9 zum Einsetzen in das Implantat, wo ebenfalls eine formschlüssige Verbindung über diesen Verbindungsbereich erreicht wird, der durch die die Klebebasis 2 durchdringende Befestigungsschraube dauerhaft hergestellt wird, Im Schnitt der Figur 3 ist diese Durchbrechung 8 für die Befestigungsschraube dargestellt,

Es soll nochmals betont werden, dass die hier zeichnerisch dargestellte Bauform nur eine mögliche Bauform darstellt. So sind die vertikal verlaufenden Profile wie hier dargestellt über die gesamte Höhe der Kontaktfläche 6 und 7 aber auch nur über einen Teilbereich anzuordnen.

Eine andere nicht zeichnerisch dargestellte Bauform weist eine Vielzahl von Verbindungsflächen auf, die sich über die Kontaktflächen 6 und 7 erstrecken oder auch nur ringförmig im unteren Anschnitt der Klebebasis 2 und des Abutments 5 angeordnet sind. Gemein ist den Lösungen, dass eine vertikale Bewegung des Abutments 5 auf die Klebebasis 2 zur Verbindung der Kontaktflächen führt und ein vertikales Anheben zur Justierung diese Verbindung wieder löst.

## Patentansprüche

1. Abutment (5) und Klebebasis (2) zum Aufsetzen auf einen implantatkopf im Kiefer eines Patienten, wobei die Kontaktfläche (6) der Klebebasis (2) zum Abutment (5) zumindest partiell profiliert ausgebildet ist und wobei die Kontaktfläche (7) des Abutments (5) zur Klebebasis (2) dergestalt mit dem Oberflächenprofil der Klebebasis (2) korrespondierend ausgebildet ist, dass das Abutment (5) aufgrund eines Formschlusses dieser Kontaktflächen (6, 7) in einer Vielzahl von verdrehsicheren Positionen auf der Klebebasis (2) angeordnet werden kann,
**dadurch gekennzeichnet, dass**
die Klebebasis (2) eine konische Grundform aufweist, wobei die nach außen weisende Kontaktfläche (6) dieser Klebebasis (2) ein Profil aus einer Vielzahl vertikal verlaufender nutenartiger Vertiefungen (3) aufweist, die vollumfänglich auf der Kontaktfläche (6) dieser Klebebasis (2) angeordnet sind, wobei hierzu korrespondierend federartig vertikal angeordnete längliche Erhebungen (4) auf der innenliegenden Kontaktflächen (7) des Abutments (5) angeordnet sind, die formschlüssig in die Vertiefungen (3) auf der Kontaktfläche (6) dieser Klebebasis (2) eingreifen, wobei diese Verbindungselemente (3, 4) derart gleichmäßig über die Kontaktflächen (6, 7) verteilt angeordnet sind, dass das Abutment (5) auf der Klebebasis (2) in einer Vielzahl von Positionen verdrehsicher, da formschlüssig, aufgesetzt werden kann, wobei durch leichtes Anheben des Abutments (5) von der Klebebasis (2) die Erhebungen (4) aus den Vertiefungen (3) gleiten und ein Drehen des Abutments (5) auf der Klebebasis (2) in eine andere Position ermöglichen, bevor durch einen Andruck des Abutments (5) auf die Klebebasis (2) die Verbindungselemente (3, 4) wieder ineinander eingreifen und die Verbindung herstellen

## Claims

1. Abutment (5) and adhesive base (2) for mounting on an implant head in the jaw of a patient, the contact face (6) of the adhesive base (2) to the abutment (5) being at least partially profiled, and the contact face (7) of the abutment (5) to the adhesive base (2) being designed corresponding to the surface profile of the adhesive base (2) in such a way that the abutment (5), on account of a form-fit engagement of these contact faces (6, 7), can be arranged in a multiplicity of rotationally secure positions on the adhesive base (2),
**characterized in that**
the adhesive base (2) has a conical main shape, wherein the outwardly directed contact face (6) of this adhesive base (2) has a profile composed of a multiplicity of vertically extending groove-like depressions (3), which are arranged around the entire circumference on the contact face (6) of this adhesive base (2), wherein vertically arranged elongate elevations (4), corresponding to these depressions (3), are arranged like a spring on the inward contact face (7) of the abutment (5) and engage with a form fit in the depressions (3) on the contact face (6) of this adhesive base (2), wherein these connection elements (3, 4) are distributed uniformly across the contact faces (6, 7) in such a way that the abutment (5) can be mounted in a rotationally secure manner, by virtue of the form-fit engagement, in a multiplicity of positions on the adhesive base (2), wherein, by lifting the abutment (5) slightly from the adhesive base (2), the elevations (4) slide out of the depressions (3) and allow rotation of the abutment (5) on the adhesive base (2) to another position before, by pressing the abutment (5)'onto the adhesive base (2), the connection elements (3, 4) engage in each other again and produce the connection.

## Revendications

1. Pilier (5) et base de collage (2) pour la mise en place sur une tête d'implant dans la mâchoire d'un patient, la surface de contact (6) de la base de collage (2) avec le pilier (5) étant réalisée de manière au moins en partie profilée et la surface de contact (7) du pilier (5) avec la base de collage (2) étant réalisée de manière correspondant au profil de surface de la base de collage (2) de telle sorte que le pilier (5), du fait d'un engagement par correspondance de formes de ces surfaces de contact (6, 7), puisse être disposé dans une pluralité de positions fixées en rotation sur la base de collage (2),
**caractérisé en ce que**
la base de collage (2) présente une forme de base conique, la surface de contact (6), tournée vers l'extérieur, de cette base de collage (2) présentant un profil constitué d'une pluralité de renfoncements (3) en forme de rainure s'étendant verticalement, qui sont disposés sur toute la périphérie sur la surface de contact (6) de cette base de collage (2), des rehaussements allongés (4) disposés verticalement de type ressort correspondant à ceux-ci étant disposés sur la surface de contact (7), située à l'intérieur, du pilier (5), lesquels rehaussements viennent en prise par engagement par correspondance de formes dans les renfoncements (3) sur la surface de contact (6) de cette base de collage (2), ces éléments de liaison (3, 4) étant répartis uniformément sur les surfaces de contact (6, 7) de telle sorte que le pilier (5) puisse être placé sur la base de collage (2) de manière fixée en rotation, puisqu'il est engagé par correspondance de formes, dans une pluralité de positions, un léger soulèvement du pilier (5) de la base de collage (2) permettant aux rehaussements (4) de glisser hors des renfoncements (3) et permettant une rotation du pilier (5) sur la base de collage (2) dans une autre position avant qu'une pression du pilier (5) sur la base de collage (2) ne provoque à nouveau l'engagement l'un dans l'autre des éléments de liaison (3, 4) et établisse la liaison.
